# EUROPEAN PATENT APPLICATION

(11) **EP 4 596 203 A1**
(43) Date of publication of application: **06.08.2025**
(21) Application number: 24155188.6
(22) Date of filing: 01.02.2024
(51) Int. Cl.: B29B 11/14, B29C 49/06, B29C 49/42, B65D 1/02, B65D 1/40, B29C 49/00, B29C 49/64, B29C 49/48, B29C 49/02

(54) **A ROUND PLASTIC BOTTLE FOR COSMETIC COMPOSITIONS**

(71) Applicant: Wella Germany GmbH, 64295 Darmstadt (DE)
(72) Inventor: Hofman, Christian, 64295 Darmstadt (DE)
(74) Representative: Baier, Martin

(57) **Abstract**

The present invention relates to a round plastic bottle for cosmetic compositions comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A). The present invention further relates to a method for the preparation of the inventive round plastic bottle and to the use of the inventive round plastic bottle for carrying or storing cosmetic compositions, especially for carrying or storing shampoo or hair conditioner. In addition, the present invention relates to a container comprising an inventive round plastic bottle and a cap (C).

## Description

### FIELD OF THE INVENTION

The present invention relates to a round plastic bottle for cosmetic compositions comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A). The present invention further relates to a method for the preparation of the inventive round plastic bottle and to the use of the inventive round plastic bottle for carrying or storing cosmetic compositions, especially for carrying or storing shampoo or hair conditioner. In addition, the present invention relates to a container comprising an inventive round plastic bottle and a cap (C).

### BACKGROUND OF THE INVENTION

In the cosmetics industry, clever packaging or packaging materials that are above all sustainable have become increasingly important in recent years. An important task in their development is, for example, to avoid products comprising non-recyclable polymers in order to avoid problems with their end-of-life management. For this reason, recycled or recyclable polymers such as polyethylene (PE) or polyethylene terephthalate (PET) are increasingly being used to manufacture containers for cosmetic compositions. As containers for liquid cosmetic compositions such as shampoo or hair conditioner, round bottles made from recycled polyethylene (PE) or polyethylene terephthalate (PET) are often used, onto which a cap is screwed or snapped on, from which the liquid composition can be squeezed out. However, it is often difficult for the consumer to squeeze the liquid composition out of the often very stiff bottles, especially with decreasing content of the bottle. The bottle must then often be shaken or cut open so that the consumer can use its content.

The object of the present invention therefore was to provide an improved plastic bottle for cosmetic compositions which does not retain the disadvantages of the prior art or only in diminished form. In addition, the plastic bottle should be easy to produce at relatively low costs.

### SUMMARY OF THE INVENTION

This object is achieved by a round plastic bottle for cosmetic compositions comprising
a bottle neck (BN),
a bottle bottom (BB) and
a bottle wall (BW),
wherein the bottle wall (BW) comprises at least one first wall segment (A) and at least one second wall segment (B), wherein the wall of the second wall segment (B) is thicker than the wall of the first wall segment (A).

It has surprisingly been found that the inventive round plastic bottle can easily be squeezed. Therefore, the consumer has a more comfortable squeeze experience when squeezing out the cosmetic composition compared to the squeeze experience when squeezing out the cosmetic compositions from plastic bottles of the prior art. Furthermore, even with decreasing content of the bottle, the consumer can easily squeeze the liquid composition out of the inventive round plastic bottle.

Moreover, the inventive round plastic bottle can be produced from recycled polyethylene terephthalate (PET) which results in a good environmental sustainability and lower production costs.

Furthermore, the inventive plastic bottle has a round shape but enables ease of squeeze like bottles having an oval shape. In addition, the round shape supports the minimal use of plastic material that is an additional benefit on plastic reduction.

### DETAILED DESCRIPTION OF THE INVENTION

The present invention will be described in more detail hereinafter.

### Round plastic bottle

The round plastic bottle for cosmetic compositions comprises
a bottle neck (BN),
a bottle bottom (BB) and
a bottle wall (BW),
wherein the bottle wall (BW) comprises at least one first wall segment (A) and at least one second wall segment (B), wherein the wall of the second wall segment (B) is thicker than the wall of the first wall segment (A).

The round plastic bottle for cosmetic compositions comprises a bottle neck (BN), a bottle bottom (BB) and a bottle wall (BW).

Preferably, the bottle neck (BN) surmounts the bottle wall (BW) and defines an opening of the inventive round plastic bottle. The bottle wall (BW) preferably has a round cylindrical shape, wherein the bottle bottom (BB) is the lower base area of the round cylindrical shape. Thus, the bottle bottom (BB) has preferably a round shape.

Preferably, the round cylindrical shape is open at the top and the bottle wall (BW) builds a shoulder there with a shoulder ancle in the range from 5 to 50°. Preferably, the transition from the bottle bottom (BB) to the bottle wall (BW) and, preferably, the transition to the shoulder is round.

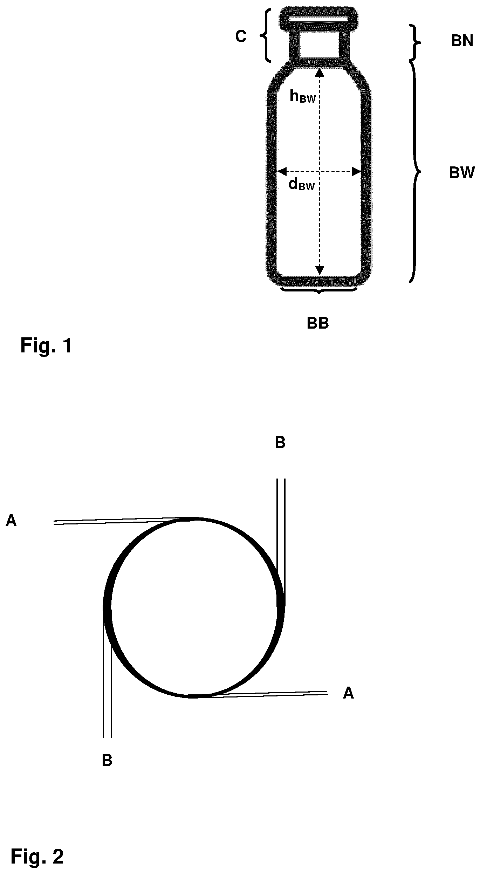

In case the bottle bottom (BB) has a round shape, the bottle bottom (BB) preferably has a diameter (d_{BB}) in the range from 30 to 80 mm. In case the bottle wall (BW) has a round cylindrical shape, the bottle wall (BW) preferably has a diameter (dew) in the range from 50 to 80 mm. The diameter (d_{BW}) of the bottle wall (BW) is determined at half the height (h_{BW}) of the bottle wall (BW) as shown in Figures 1, 3 and 4, The height (h_{BW}) of the bottle wall (BW) is the distance between the bottle bottom (BB) and the bottle neck (BN). The height (h_{BW}) of the bottle wall (BW) is preferably in the range from 90 to 130 mm.

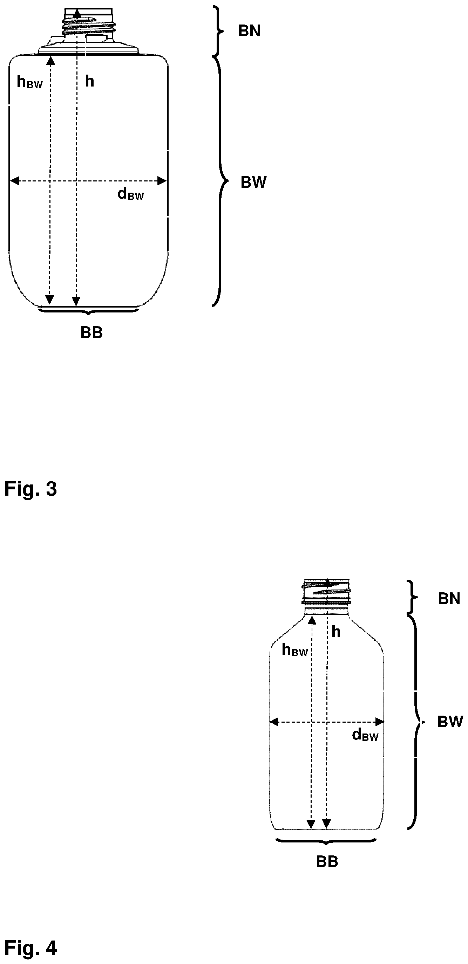

In a preferred embodiment, the round plastic bottle has a total height (h) in the range from 120 to 160 mm. The total height (h) of the round plastic bottle is defined as the distance between the bottle bottom (BB) and the opening of the bottle neck (BN) as shown in Figures 3 and 4.

In a preferred embodiment, a cap (C) is mounted onto the round plastic bottle, preferably onto the bottle neck (BN) of the round plastic bottle. The embodiment comprising an inventive round plastic bottle and a cap (C) is also called "a container".

Accordingly, a further object of the present invention is a container comprising an inventive round plastic bottle and a cap (C).

In a preferred embodiment, the cap (C) is configured to cooperate with the bottle neck (BN), in particular by screwing or snapping on, in order to seal the inventive round plastic bottle.

In one embodiment, the cap (C) has the shape of a mushroom. However, also other shapes of the cap (C) are possible.

For example, the cap (C) has a flip-top closure.

In a preferred embodiment, the cap (C) is produced from polypropylene (PP).

In Figure 1, an inventive round plastic bottle or an inventive container, respectively, is shown. The round plastic bottle comprises a bottle neck (BN) (not visible), a bottle bottom (BB) and a bottle wall (BW). The bottle neck (BN) surmounts the bottle wall (BW) and defines an opening of the inventive round plastic bottle. The bottle wall (BW) has a round cylindrical shape, wherein the round-shaped bottle bottom (BB) is the lower base area of the round cylindrical shape. The round cylindrical shape is open at the top and the bottle wall (BW) builds a shoulder there with a shoulder ancle of 45°. The transition from the bottle bottom (BB) to the bottle wall (BW) and the transition to the shoulder is round. A cap (C) is mounted onto the bottle neck (BN) of the round plastic bottle. The embodiment comprising the inventive round plastic bottle and the cap (C) is also called "a container". The cap (C) has the shape of a mushroom. The bottle wall (BW) has a diameter (dew) in the range from 55 to 60 mm. The diameter (d_{BW}) of the bottle wall (BW) is determined at half the height (h_{BW}) of the bottle wall (BW), The height (h_{BW}) of the bottle wall (BW) is the distance between the bottle bottom (BB) and the bottle neck (BN).

In Figure 3, also an inventive round plastic bottle is shown. The round plastic bottle comprises a bottle neck (BN), a bottle bottom (BB) and a bottle wall (BW). The bottle neck (BN) surmounts the bottle wall (BW) and defines an opening of the inventive round plastic bottle. The bottle wall (BW) has a round cylindrical shape, wherein the round-shaped bottle bottom (BB) is the lower base area of the round cylindrical shape. The round cylindrical shape is open at the top. The transition from the bottle bottom (BB) to the bottle wall (BW) and the transition to the bottle neck (BN) is round. The bottle wall (BW) has a diameter (d_{BW}) of 70 mm. The diameter (d_{BW}) of the bottle wall (BW) is determined at half the height (h_{BW}) of the bottle wall (BW), The height (h_{BW}) of the bottle wall (BW) is the distance between the bottle bottom (BB) and the bottle neck (BN). The round plastic bottle has a total height (h) in the range from 130 to 135 mm. The total height (h) of the round plastic bottle is defined as the distance between the bottle bottom (BB) and the opening of the bottle neck (BN).

In Figure 4, also an inventive round plastic bottle is shown. The round plastic bottle comprises a bottle neck (BN), a bottle bottom (BB) and a bottle wall (BW). The bottle neck (BN) surmounts the bottle wall (BW) and defines an opening of the inventive round plastic bottle. The bottle wall (BW) has a round cylindrical shape, wherein the round-shaped bottle bottom (BB) is the lower base area of the round cylindrical shape. The round cylindrical shape is open at the top and the bottle wall (BW) builds a shoulder there. The transition from the bottle bottom (BB) to the bottle wall (BW) and the transition to the shoulder is round. The bottle wall (BW) has a diameter (dew) in the range from 60 to 70 mm. The diameter (d_{BW}) of the bottle wall (BW) is determined at half the height (h_{BW}) of the bottle wall (BW), The height (h_{BW}) of the bottle wall (BW) is the distance between the bottle bottom (BB) and the bottle neck (BN). The round plastic bottle has a total height (h) in the range from 140 to 145 mm. The total height (h) of the round plastic bottle is defined as the distance between the bottle bottom (BB) and the opening of the bottle neck (BN).

The bottle wall (BW) comprises at least one first wall segment (A) and at least one second wall segment (B), wherein the wall of the second wall segment (B) is thicker than the wall of the first wall segment (A).

The round plastic bottle can comprise any numbers of first wall segments (A) and any numbers of second wall segments (B) desired by a skilled person.

However, in a preferred embodiment, the bottle wall (BW) comprises two first wall segments (A) and two second wall segments (B), wherein the two first wall segments (A) are arranged opposite each other, and the two second wall segments (B) are arranged opposite each other.

In case the bottle wall (BW) comprises two first wall segments (A) and two second wall segments (B), wherein the two first wall segments (A) are arranged opposite each other, and the two second wall segments (B) are arranged opposite each other, preferably, the first wall segments (A) are each positioned at an angle in the range from 70 to 110 degree, more preferably at an angle in the range from 80 to 100 degree, most preferably at an angle of 90 degree, to the second wall segments (B).

Therefore, another object of the present invention is also a round plastic bottle for cosmetic compositions wherein the bottle wall (BW) comprises two first wall segments (A) and two second wall segments (B), wherein the two first wall segments (A) are arranged opposite each other, and the two second wall segments (B) are arranged opposite each other.

The at least one first wall segment (A) can have any thickness desired by a skilled person, provided that the wall of the at least one first wall segment (A) is thinner than the wall of the at least one second wall segment (B).

In a preferred embodiment, the wall of the first wall segment (A) has a thickness in the range from 0.2 to 1.0 mm, preferably in the range from 0.2 to 0.8 mm, more preferably in the range from 0.2 to 0.5 mm. The thickness of the first wall segment (A) is the thickness of the thinnest point of the bottle wall (BW).

Another object of the present invention is therefore also a round plastic bottle for cosmetic compositions wherein the wall of the first wall segment (A) has a thickness in the range from 0.2 to 1.0 mm.

The at least one second wall segment (B) can also have any thickness desired by a skilled person, provided that the wall of the at least one second wall segment (B) is thicker than the wall of the at least one first wall segment (A).

However, in a further preferred embodiment, the wall of the second wall segment (B) has a thickness in the range from 0.4 to 2.0 mm, preferably in the range from 0.4 to 1.8 mm, more preferably in the range from 0.4 to 1.4 mm. The thickness of the second wall segment (B) is the thickness of the thickest point of the bottle wall (BW).

Another object of the present invention is therefore also a round plastic bottle for cosmetic compositions wherein the wall of the second wall segment (B) has a thickness in the range from 0.4 to 2.0 mm.

In a preferred embodiment, the segments (A) and (B) merge seamlessly.

It is preferred that the thickness of the wall of the first wall segment (A) is in the range from 10 to 60%, preferably in the range from 20 to 40%, of the thickness of the wall of the second wall segment (B).

It is also preferred that the ratio of the thickness of the wall of the first wall segment (A) to the thickness of the wall of the second wall segment (B) is in the range from 1:10 to 1 :1.7, more preferably in the range from 1:5 to 1:2.5.

In Figure 2, a cross section of the bottle wall (BW) is shown. The bottle wall (BW) comprises two first wall segments (A) and two second wall segments (B), wherein the wall of the second wall segment (B) is thicker than the wall of the first wall segment (A). The two first wall segments (A) are arranged opposite each other, and the two second wall segments (B) are arranged opposite each other. The first wall segments (A) are each positioned at an angle of 90 degree to the second wall segments (B). The segments (A) and (B) merge seamlessly.

The round plastic bottle for cosmetic compositions is preferably produced from polyethylene terephthalate (PET), more preferably from recycled polyethylene terephthalate (PET).

Another object of the present invention is therefore also a round plastic bottle for cosmetic compositions wherein the round plastic bottle is produced from polyethylene terephthalate (PET).

The inventive round plastic bottle can be from transparent to opaque.

Another object of the present invention is therefore also a round plastic bottle for cosmetic compositions wherein the round plastic bottle is from transparent to opaque.

The round plastic bottle can comprise any desired volume. Preferably, the round plastic bottle comprises a volume in the range from 100 to 500 mL, more preferably from 200 to 400 mL.

Another object of the present invention is therefore also a round plastic bottle for cosmetic compositions wherein the round plastic bottle comprises a volume in the range from 100 to 500 mL.

Preferably, the round plastic bottle is produced by stretch blow molding (SBM).

Therefore, another object of the present invention is also a round plastic bottle for cosmetic compositions wherein the round plastic bottle is produced by stretch blow molding (SBM).

### Method for the preparation of the round plastic bottle

The inventive round plastic bottle is preferably prepared by a method, wherein the method comprises the steps:
a) providing a round plastic preform (P) for the round plastic bottle, wherein the round plastic preform (P) comprises a bottle neck (BN_{P}), a bottle bottom (BB_{P}) and a bottle wall (BW_{P}), wherein the wall of the bottle wall (BW_{P}) has a uniform thickness,
b) introducing the round plastic preform (P) provided in step a) into a heating device, wherein, in the heating device, the wall of the bottle wall (BW_{P}) is uniformly heated by a vertical rotation of the round plastic preform (P) at a temperature (T_{b)}),
c) orientating the uniformly heated round plastic preform (P) obtained in step b) in the heating device so that at least one first position of the bottle wall (BW_{P}) is heated at a temperature (T_{c)}), wherein a round plastic preform (P*) with a bottle wall (BW*) is obtained, wherein the bottle wall (BW*) comprises at least one first wall segment (A*) and at least one second wall segment (B*), the segment (A*) having a higher temperature than the segment (B*),
d) removing the round plastic preform (P*) obtained in step c) from the heating device, and
e) stretch blow molding the round plastic preform (P*) to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A).

Another object of the present invention is therefore also a method for the preparation of an inventive round plastic bottle for cosmetic compositions, wherein the method comprises the steps:
a) providing a round plastic preform (P) for the round plastic bottle, wherein the round plastic preform (P) comprises a bottle neck (BN_{P}), a bottle bottom (BB_{P}) and a bottle wall (BW_{P}), wherein the wall of the bottle wall (BW_{P}) has a uniform thickness,
b) introducing the round plastic preform (P) provided in step a) into a heating device, wherein, in the heating device, the wall of the bottle wall (BW_{P}) is uniformly heated by a vertical rotation of the round plastic preform (P) at a temperature (T_{b)}),
c) orientating the uniformly heated round plastic preform (P) obtained in step b) in the heating device so that at least one first position of the bottle wall (BW_{P}) is heated at a temperature (T_{c)}), wherein a round plastic preform (P*) with a bottle wall (BW*) is obtained, wherein the bottle wall (BW*) comprises at least one first wall segment (A*) and at least one second wall segment (B*), the segment (A*) having a higher temperature than the segment (B*),
d) removing the round plastic preform (P*) obtained in step c) from the heating device, and
e) stretch blow molding the round plastic preform (P*) to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A).

### Step a)

In step a), a round plastic preform (P) for the round plastic bottle is provided.

In the context of the present invention the term "preform (P)" means an intermediate product from which the round plastic bottle is made.

The preform (P) can be provided by any method known to the skilled person. In a preferred embodiment, the round plastic preform (P) is provided by an injection molding process.

Another object of the present invention is therefore also a method for the preparation of an inventive round plastic bottle for cosmetic compositions, wherein the round plastic preform (P) is provided by an injection molding process.

The round plastic preform (P) is preferably produced from polyethylene terephthalate (PET), more preferably from recycled polyethylene terephthalate (PET).

Another object of the present invention is therefore also a method for the preparation of an inventive round plastic bottle for cosmetic compositions, wherein the round plastic preform (P) is produced from polyethylene terephthalate (PET).

The round plastic preform (P) comprises a bottle neck (BN_{P}), a bottle bottom (BB_{P}) and a bottle wall (BW_{P}).

Preferably, the bottle neck (BNp) surmounts the bottle wall (BW_{P}) and defines an opening of the round plastic preform (P). The bottle wall (BW_{P}) preferably has a round cylindrical shape, wherein the bottle bottom (BB_{P}) is the lower base area of the round cylindrical shape. The bottle bottom (BB_{P}) has preferably a round shape and is preferably convex. Preferably, the round cylindrical shape is open at the top and the bottle wall (BW_{P}) builds a shoulder there with a shoulder ancle in the range from 5 to 50°.

The wall of the bottle wall (BW_{P}) has a uniform thickness. Therefore, the preform (P) does preferably not comprise any segments.

### Step b)

In step b), the round plastic preform (P) provided in step a) is introduced into a heating device, wherein, in the heating device, the wall of the bottle wall (BW_{P}) is uniformly heated by a vertical rotation of the round plastic preform (P) at a temperature (T_{b)}).

The heating device can be any heating device known to a skilled person provided that the wall of the bottle wall (BW_{P}) can be uniformly heated by a vertical rotation of the round plastic preform (P) at a temperature (T_{b)}) in the heating device.

The temperature (T_{b)}) is preferably in the range from 80 to 120 °C.

### Step c)

In step c), the uniformly heated round plastic preform (P) obtained in step b) is so orientated in the heating device that at least one first position of the bottle wall (BW_{P}) is heated at a temperature (T_{c)}), wherein a round plastic preform (P*) with a bottle wall (BW*) is obtained, wherein the bottle wall (BW*) comprises at least one first wall segment (A*) and at least one second wall segment (B*), the segment (A*) having a higher temperature than the segment (B*).

It is clear for a skilled person that the at least one first wall segment (A*), and consequently also the at least one second wall segment (B*), is obtained by heating at least one first position of the bottle wall (BW_{P}) at a temperature (T_{c)}).

Preferably, the temperature (T_{c)}) is in the range from 80 to 120 °C. In a preferred embodiment, the temperature (T_{c)}) is identical to the temperature (T_{b)}).

Therefore, another object of the present invention is a method for the preparation of an inventive round plastic bottle for cosmetic compositions, wherein the temperature (T_{c)}) is in the range from 80 to 120 °C.

In a preferred embodiment, in step c), the uniformly heated round plastic preform (P) obtained in step b) is so orientated in the heating device that two first positions of the bottle wall (BW_{P}) are heated at a temperature (T_{c)}), wherein the two first positions are arranged opposite each other, and wherein a round plastic preform (P*) with a bottle wall (BW*) is obtained, wherein the bottle wall (BW*) comprises two segments (A*) and two segments (B*), wherein the two segments (A*) are arranged opposite each other, and the two segments (B*) are arranged opposite each other.

It is clear for a skilled person that the two first wall segments (A*), and consequently also the two second wall segments (B*), are obtained by heating two first positions of the bottle wall (BW_{P}) at a temperature (T_{c)}), wherein the two first positions are arranged opposite each other.

Therefore, another object of the present invention is also a method for the preparation of an inventive round plastic bottle for cosmetic compositions, wherein, in step c), the uniformly heated round plastic preform (P) obtained in step b) is so orientated in the heating device that two first positions of the bottle wall (BW_{P}) are heated at a temperature (T_{c)}), wherein the two first positions are arranged opposite each other, and wherein a round plastic preform (P*) with a bottle wall (BW*) is obtained, wherein the bottle wall (BW*) comprises two segments (A*) and two segments (B*), wherein the two segments (A*) are arranged opposite each other, and the two segments (B*) are arranged opposite each other.

### Step d)

In step d), the round plastic preform (P*) obtained in step c) is removed from the heating device.

### Step e)

In step e), the round plastic preform (P*) is stretch blow molded to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A).

In a preferred embodiment, the stretch blow molding in step e) comprises the following steps e1) to e6)
e1) introducing the round plastic preform (P*) into a mould,
e2) closing the mould,
e3) stretching and pre-blowing of the plastic preform (P*) in the mould,
e4) blowing the preform (P*) in the mould to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A),
e5) opening the mould, and
e6) discharging the round plastic bottle.

Another object of the present invention is a round plastic bottle obtained by the method described above.

The inventive round plastic bottle can be used for carrying or storing cosmetic compositions, preferably for carrying or storing cosmetic hair compositions, especially for carrying or storing shampoo or hair conditioner.

Therefore, another object of the present invention is the use of the inventive round plastic bottle for carrying or storing cosmetic compositions, especially for carrying or storing shampoo or hair conditioner.

### Reference signs

- BN: Bottle neck
- BW: Bottle wall
- BB: Bottle bottom
- C: Cap
- A: First wall segment
- B: Second wall segment
- h_{BW}: Height of the bottle wall
- d_{BW}: Diameter of the bottle wall
- h: Total height of the round plastic bottle

### Embodiments

In the following, there is provided a list of embodiments to further illustrate the present disclosure without intending to limit the disclosure to the specific embodiments listed below.
1. A round plastic bottle for cosmetic compositions comprising
   a bottle neck (BN),
   a bottle bottom (BB) and
   a bottle wall (BW),
   wherein the bottle wall (BW) comprises at least one first wall segment (A) and at least one second wall segment (B), wherein the wall of the second wall segment (B) is thicker than the wall of the first wall segment (A).
2. The round plastic bottle for cosmetic compositions according to embodiment 1, wherein the wall of the first wall segment (A) has a thickness in the range from 0.2 to 1.0 mm, preferably in the range from 0.2 to 0.8 mm, and more preferably in the range from 0.2 to 0.5 mm.
3. The round plastic bottle for cosmetic compositions according to embodiment 1 or 2, wherein the wall of the second wall segment (B) has a thickness in the range from 0.4 to 2.0 mm, preferably in the range from 0.4 to 1.8 mm, more preferably in the range from 0.4 to 1.4 mm.
4. The round plastic bottle for cosmetic compositions according to any one of embodiments 1 to 3, wherein the thickness of the wall of the first wall segment (A) is in the range from 10 to 60%, preferably in the range from 20 to 40%, of the thickness of the wall of the second wall segment (B).
5. The round plastic bottle for cosmetic compositions according to any one of embodiments 1 to 4, wherein the ratio of the thickness of the wall of the first wall segment (A) to the thickness of the wall of the second wall segment (B) is in the range from 1:10 to 1:1.7, more preferably in the range from 1:5 to 1:2.5.
6. The round plastic bottle for cosmetic compositions according to any one of embodiments 1 to 5, wherein the round plastic bottle is produced from polyethylene terephthalate (PET), preferably from recycled polyethylene terephthalate (PET).
7. The round plastic bottle for cosmetic compositions according to any one of embodiments 1 to 6, wherein the round plastic bottle is from transparent to opaque.
8. The round plastic bottle for cosmetic compositions according to any one of embodiments 1 to 7, wherein the round plastic bottle comprises a volume in the range from 100 to 500 mL, more preferably from 200 to 400 mL.
9. The round plastic bottle for cosmetic compositions according to any one of embodiments 1 to 8, wherein the bottle wall (BW) comprises two first wall segments (A) and two second wall segments (B), wherein the two first wall segments (A) are arranged opposite each other, and the two second wall segments (B) are arranged opposite each other.
10. The round plastic bottle for cosmetic compositions according to embodiment 9, wherein the first wall segments (A) are each positioned at an angle in the range from 70 to 110 degree, more preferably at an angle in the range from 80 to 100 degree, most preferably at an angle of 90 degree, to the second wall segments (B).
11. The round plastic bottle for cosmetic compositions according to any one of embodiments 1 to 10, wherein the round plastic bottle is produced by stretch blow molding (SBM).
12. A method for the preparation of a round plastic bottle for cosmetic compositions according to any of embodiments 1 to 11, wherein the method comprises the steps:
   a) providing a round plastic preform (P) for the round plastic bottle, wherein the round plastic preform (P) comprises a bottle neck (BN_{P}), a bottle bottom (BB_{P}) and a bottle wall (BW_{P}), wherein the wall of the bottle wall (BW_{P}) has a uniform thickness,
   b) introducing the round plastic preform (P) provided in step a) into a heating device, wherein, in the heating device, the wall of the bottle wall (BW_{P}) is uniformly heated by a vertical rotation of the round plastic preform (P) at a temperature (T_{b)}),
   c) orientating the uniformly heated round plastic preform (P) obtained in step b) in the heating device so that at least one first position of the bottle wall (BW_{P}) is heated at a temperature (T_{c)}), wherein a round plastic preform (P*) with a bottle wall (BW*) is obtained, wherein the bottle wall (BW*) comprises at least one first wall segment (A*) and at least one second wall segment (B*), the segment (A*) having a higher temperature than the segment (B*),
   d) removing the round plastic preform (P*) obtained in step c) from the heating device, and
   e) stretch blow molding the round plastic preform (P*) to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A).
13. The method according to embodiment 12, wherein the round plastic preform (P) is provided by an injection molding process.
14. The method according to embodiment 12 or 13, wherein the round plastic preform (P) is produced from polyethylene terephthalate (PET).
15. The method according to any of embodiments 12 to 14, wherein the temperature (T_{c)}) is in the range from 80 to 120 °C.
16. The method according to any of embodiments 12 to 15, wherein, in step c), the uniformly heated round plastic preform (P) obtained in step b) is so orientated in the heating device that two first positions of the bottle wall (BW_{P}) are heated at a temperature (T_{c)}), wherein the two first positions are arranged opposite each other, and wherein a round plastic preform (P*) with a bottle wall (BW*) is obtained, wherein the bottle wall (BW*) comprises two segments (A*) and two segments (B*), wherein the two segments (A*) are arranged opposite each other, and the two segments (B*) are arranged opposite each other.
17. A round plastic bottle obtained by a method according to any one of embodiments 12 to 16.
18. The use of a round plastic bottle according to any one of embodiments 1 to 11 or according to embodiment 17 for carrying or storing cosmetic compositions, especially for carrying or storing shampoo or hair conditioner.
19. A container comprising a round plastic bottle according to any one of embodiments 1 to 11 or according to embodiment 17 and a cap (C).
20. The container according to embodiment 19, wherein the container houses cosmetic compositions.

## Claims

1. A round plastic bottle for cosmetic compositions comprising
a bottle neck (BN),
a bottle bottom (BB) and
a bottle wall (BW),
wherein the bottle wall (BW) comprises at least one first wall segment (A) and at least one second wall segment (B), wherein the wall of the second wall segment (B) is thicker than the wall of the first wall segment (A).

2. The round plastic bottle for cosmetic compositions according to claim 1, wherein the wall of the first wall segment (A) has a thickness in the range from 0.2 to 1.0 mm.

3. The round plastic bottle for cosmetic compositions according to claim 1 or 2, wherein the wall of the second wall segment (B) has a thickness in the range from 0.4 to 2.0 mm.

4. The round plastic bottle for cosmetic compositions according to any one of claims 1 to 3, wherein the round plastic bottle is produced from polyethylene terephthalate (PET).

5. The round plastic bottle for cosmetic compositions according to any one of claims 1 to 4, wherein the round plastic bottle is from transparent to opaque.

6. The round plastic bottle for cosmetic compositions according to any one of claims 1 to 5, wherein the round plastic bottle comprises a volume in the range from 100 to 500 mL.

7. The round plastic bottle for cosmetic compositions according to any one of claims 1 to 6, wherein the bottle wall (BW) comprises two first wall segments (A) and two second wall segments (B), wherein the two first wall segments (A) are arranged opposite each other, and the two second wall segments (B) are arranged opposite each other.

8. The round plastic bottle for cosmetic compositions according to any one of claims 1 to 7, wherein the round plastic bottle is produced by stretch blow molding (SBM).

9. A method for the preparation of a round plastic bottle for cosmetic compositions according to any one of claims 1 to 8, wherein the method comprises the steps:
a) providing a round plastic preform (P) for the round plastic bottle, wherein the round plastic preform (P) comprises a bottle neck (BN_{P}), a bottle bottom (BB_{P}) and a bottle wall (BW_{P}), wherein the wall of the bottle wall (BW_{P}) has a uniform thickness,
b) introducing the round plastic preform (P) provided in step a) into a heating device, wherein, in the heating device, the wall of the bottle wall (BW_{P}) is uniformly heated by a vertical rotation of the round plastic preform (P) at a temperature (T_{b)}),
c) orientating the uniformly heated round plastic preform (P) obtained in step b) in the heating device so that at least one first position of the bottle wall (BW_{P}) is heated at a temperature (T_{c)}), wherein a round plastic preform (P*) with a bottle wall (BW*) is obtained, wherein the bottle wall (BW*) comprises at least one first wall segment (A*) and at least one second wall segment (B*), the segment (A*) having a higher temperature than the segment (B*),
d) removing the round plastic preform (P*) obtained in step c) from the heating device, and
e) stretch blow molding the round plastic preform (P*) to obtain a round plastic bottle comprising a bottle neck (BN), a bottle bottom (BB) and a bottle wall (BW), wherein the bottle wall (BW) comprises at least one first wall segment (A) and at least one second wall segment (B), wherein the wall of the second wall segment (B) is thicker than the wall of the first wall segment (A).

10. The method according to claim 9, wherein the round plastic preform (P) is provided by an injection molding process.

11. The method according to claim 9 or 10, wherein the round plastic preform (P) is produced from polyethylene terephthalate (PET).

12. The method according to any of claims 9 to 11, wherein the temperature (T_{c)}) is in the range from 80 to 120 °C.

13. The method according to any of claims 9 to 12, wherein, in step c), the uniformly heated round plastic preform (P) obtained in step b) is so orientated in the heating device that two first positions of the bottle wall (BW_{P}) are heated at a temperature (T_{c)}), wherein the two first positions are arranged opposite each other, and wherein a round plastic preform (P*) with a bottle wall (BW*) is obtained, wherein the bottle wall (BW*) comprises two segments (A*) and two segments (B*), wherein the two segments (A*) are arranged opposite each other, and the two segments (B*) are arranged opposite each other.

14. A round plastic bottle obtained by a method according to any one of claims 9 to 13.

15. The use of a round plastic bottle according to any one of claims 1 to 8 or according to claim 14 for carrying or storing cosmetic compositions, especially for carrying or storing shampoo or hair conditioner.

16. A container comprising a round plastic bottle according to any one of claims 1 to 8 or according to claim 14 and a cap (C).
